# EUROPEAN PATENT APPLICATION

(11) **EP 3 130 227 A1**
(43) Date of publication of application: **15.02.2017**
(21) Application number: 15777441.5
(22) Date of filing: 20.03.2015
(51) Int. Cl.: A01K 63/04

(54) **OXYGEN DISSOLUTION DEVICE**

(30) Priority: 09.04.2014 KR 20140042320
(71) Applicant: Kim, In Ho, Ganghwa-gun, Incheon 417-912 (KR)
(72) Inventor: KIM, Geon Ho, Gimpo-si Gyeonggi-do 415-718 (KR)
(74) Representative: Byrne, Declan
(86) International application number: PCT/KR2015/002709
(87) International publication number: WO 2015/156514

(57) **Abstract**

The present invention pertains to an oxygen dissolution device, and in particular to an oxygen dissolution device configured from: an electric motor; a shaft which is coupled to the motor shaft of the electric motor and which rotates along therewith; an impeller which is provided to the shaft and which rotates with the shaft when the shaft rotates; a plurality of first smashing blades which are provided such that the central portions thereof are penetrated by the shaft, which are provided so as to be at a fixed distance from the shaft, and in which a plurality of flow holes are formed; a plurality of second smashing blades which are provided such that the central portions thereof are penetrated by the shaft, which are provided between the first smashing blades, and in which a plurality of flow holes are formed, said flow holes having a different area to the flow holes formed in the first smashing blades and being inclined at a fixed angle relative to the shaft; and a housing which encloses the impeller, the first smashing blades and the second smashing blades, which is provided with an air injection port for supplying oxygen and a water injection port for supplying water, and which is provided with a water discharge port that discharges dissolved oxygen water in which oxygen and water are mixed. The device enables the preparation of dissolved oxygen water containing a large amount of dissolved oxygen, thus having the effect of enabling the reduction in the costs of purchasing oxygen.

## Description

### Technical Field

The present invention pertains to an oxygen dissolution device, and specifically, to an oxygen dissolution device which may dissolve a large amount of oxygen to reduce purchasing costs of oxygen.

### Background Art

Generally, in a fish farm using fresh water or seawater, a water tank of a vehicle for transporting farmed live fish, and a water tank for storing and exhibiting the live fish, etc., a device, which supplies oxygen into the water tank in order to allow the introduced live fish to survive for a long period of time, is used.

As the conventional device used for supplying oxygen into the fish farm, the water tank for transporting, a fish tank, or an aquarium, etc., a device, in which oxygen supplied from an oxygen tank or an electrical or mechanical oxygen generator is transmitted only by a pressure inside the oxygen tank or a pressure of the oxygen generator itself, and the transmitted oxygen is supplied into the water tank or the fish farm, etc. through a porous diffuser tube, is mostly used.

However, in the conventional oxygen supply device as described above, since the oxygen is introduced into water with the oxygen to be supplied to the water tank or the fish farm being directly spurted through the diffuser tube, the oxygen spurted from the diffuser tube is supplied with a significantly increased size of bubble particles. Further, immediately after spurting, bubbles are coupled with each other while discharging bubble-shaped oxygen, thus to be formed as bubbles having more increased size.

Accordingly, a surface area of entire oxygen bubbles contacting with water is decreased, as well as, the size of the bubbles is large, such that a floating speed of oxygen in the water is largely increased to reduce an amount of oxygen dissolved in the water, and therefore, a problem of deteriorating an oxygen dissolution efficiency occurs.

The above-described conventional oxygen dissolution device is very wasteful with oxygen due to a low oxygen dissolution efficiency, such that large costs of introducing oxygen for managing the fish farm are required, thus having economic disadvantages

### Prior Art Document

### Patent Document

Patent Document 1 Korean Patent Application No. 10-2010-0128764 (Korean Patent Laid-Open Publication No. 10-2012-0067394, title of the invention: a gas oxygen dissolution unit and an oxygen dissolution device using the same)

### Disclosure

### Technical Problem

In consideration of the above-mentioned circumstances, it is an object of the present invention to provide an oxygen dissolution device which allows a large amount of oxygen to be quickly dissolved in water by forming eddies and currents therein.

### Technical Solution

In order to accomplish the above object, there is provided an oxygen dissolution device including: an electric motor; a shaft which is connected to a motor shaft of the electric motor to rotate therewith; an impeller which is fixed to the shaft to rotate therewith when the shaft rotates; a plurality of first smashing blades which are mounted on the shaft apart from each other at a fixed interval while the shaft passes through central portions thereof, and have a plurality of flow holes formed therein; a plurality of second smashing blades which are mounted between the first smashing blades on the shaft which passes through central portions thereof, and have a plurality of flow holes formed therein; and a housing which encloses the impeller, the first smashing blades and the second smashing blades, and includes an air injection port into which oxygen is introduced, a water injection port into which water is introduced, and a water discharge port through which oxygen-dissolved water, in which oxygen and water are mixed, is discharged

Herein, the first smashing blades are fixedly mounted on an outer circumference of the shaft through the central portions thereof so as to rotate therewith when the shaft rotates, and the second smashing blades are mounted on the shaft though bearings which are installed in the central portions thereof so that a rotation force of the shaft is not transmitted thereto.

In addition, at least one of the first smashing blade 40 and the second smashing blade 50 has concavo-convexes repeatedly formed on an outer circumference thereof.

### Advantageous Effects

According to the oxygen dissolution device of the present invention having the above-described configuration, oxygen and water introduced into the housing are agitated and mixed with each other by eddies and currents formed by the plurality of first smashing blades and the second smashing blades, then converted into oxygen-dissolved water having a large amount of dissolved oxygen. Therefore, an amount of oxygen which is not dissolved in the water to be waste may be decreased so as to reduce purchase costs of oxygen, as well as, when supplying the oxygen-dissolved water having a large amount of dissolved oxygen as described above to a fish farm, the amount of dissolved oxygen of the water in the fish farm may be rapidly adjusted to a level which is suitable for the farmed fish to live in.

### Description of Drawings

FIG. 1 is a perspective view illustrating an oxygen dissolution device according to the present invention.
FIG. 2 is a perspective view illustrating an internal structure of the oxygen dissolution device illustrated in FIG. 1.
FIG. 3 is views illustrating a first smashing blade according to the present invention.
FIG. 4 is views illustrating a second smashing blade according to the present invention.

### Best Mode

Hereinafter, embodiments of an oxygen dissolution device according to the present invention will be described in detail with reference to the accompanying drawings.

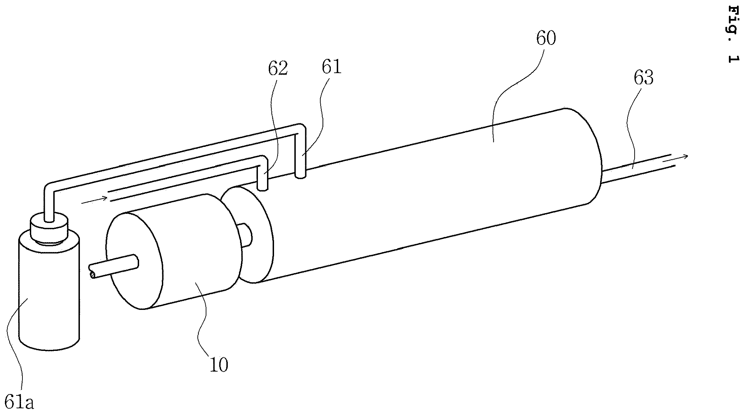

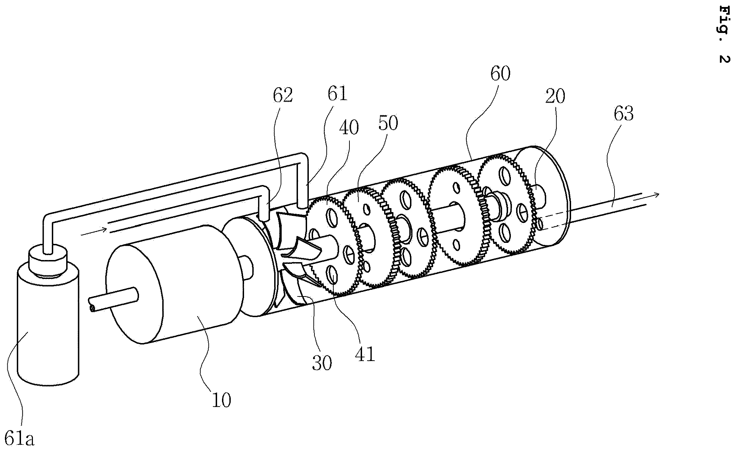

FIG. 1 is a perspective view illustrating an oxygen dissolution device according to the present invention, FIG. 2 is a perspective view illustrating an internal structure of the oxygen dissolution device illustrated in FIG. 1.

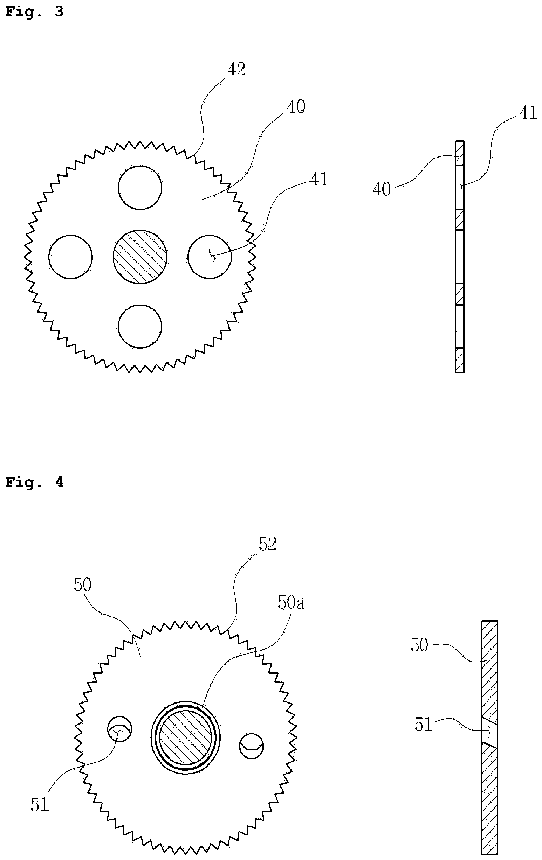

In addition, FIG. 3 is views illustrating a first smashing blade according to the present invention, and FIG. 4 is views illustrating a second smashing blade according to the present invention.

The oxygen dissolution device according to the present invention includes: an electric motor 10, a shaft 20 which is connected to a motor shaft of the electric motor 10, an impeller 30 which is fixed to the shaft 20, a plurality of first smashing blades 40 which are mounted on the shaft 20 apart from each other at a fixed interval, a plurality of second smashing blades 50 which are mounted between the first smashing blades 40 on the shaft 20, and a housing 60 which encloses the impeller 30, the first smashing blades 40 and the second smashing blades 50.

When power is supplied to the electric motor 10 from an external power source, the motor shaft thereof rotates in one direction.

The shaft 20 is linearly connected to the motor shaft of the electric motor 10, such that, when the motor shaft rotates, the shaft rotates along therewith at the same speed.

The impeller 30 is installed at a front portion of the shaft 20, that is, at a portion near the motor shaft of the electric motor 10, such that, when the shaft 20 rotates, the impeller rotates along therewith in the same direction at the same speed. Such the impeller 30 generates a pressure in the housing 60 while rotating at a high speed along with the shaft 20.

The first smashing blades 40 are installed so that the shaft 20 passes through central portions thereof on a rear side of the shaft 20 from the impeller 30. More particularly, the central portion of the first smashing blade 40 is drilled, and the drilled central portion is fixedly mounted on an outer circumference of the shaft 20 to rotate along therewith when the shaft 20 rotates in the same direction at the same speed.

Such the first smashing blade 40 has a plurality of flow holes 41 formed therein. Each flow hole 41 plays a role of a passage through which water, oxygen or oxygen-dissolved water in which the water and oxygen are mixed. Accordingly, oxygen introduced through an air injection port 61 to be described below, and water introduced through a water injection port 62 to be described, as well as the oxygen-dissolved water formed by mixing the oxygen and water pass through each flow hole.

The second smashing blades 50 are mounted on the shaft 20 which passes through central portions thereof, and are alternately arranged between the first smashing blades 40. More particularly, the central portion of the second smashing blade 50 is drilled, and the drilled central portion is mounted on the outer circumference of the shaft 20 though a bearing 50a installed therein so that a rotation force of the shaft is not transmitted thereto. That is, the central portion of the first smashing blade 40 is fixed to the outer circumference of the shaft 20, thus to have the rotation of the shaft 20 applied thereto. However, the second smashing blades 50 are mounted on the shaft 20 through the bearing 50a to countervail the rotation force thereof, such that even if the shaft 20 rotates, the second smashing blade 50 does not rotate, or may rotate at a different speed from the rotation speed of the shaft 20.

Such the second smashing blade 50 has a plurality of flow holes 51 formed therein. Similar to each flow hole 41 formed in the first smashing blade 40, each flow hole 51 plays a role of a passage through which water, oxygen or oxygen-dissolved water in which the water and oxygen are mixed.

Meanwhile, the flow holes 41 formed in the first smashing blades 40 and the flow holes 51 formed in the second smashing blades 50 have different areas from each other. More particularly, four flow holes 41 are formed in the first smashing blade 40 at an angle of 90 degrees, respectively, and two flow holes 51 are formed in the second smashing blade 50 at an angle of 180 degrees, respectively. Herein, a sum of the areas of the four flow holes 41 formed in the first smashing blades 40 is larger than a sum of the areas of the two flow holes 51 formed in the second smashing blade 50. In addition, when matching each of the flow holes 41 and 51 one to one, the area of one flow hole 41 formed in the first smashing blade 40 is larger than the area of one flow hole 51 formed in the second smashing blade 50.

The reason for forming the areas of each flow hole 41 of the first smashing blade 40 and each hole 51 of the second smashing blade 50 different from each other is that a velocity of water passing through each flow hole 41 of the first smashing blade 40 and a velocity of water passing through each flow hole 51 of the second smashing blade 50 are set to be different from each other, such that eddies and currents are formed within the housing, and much oxygen is rapidly dissolved in the water due to the eddies and currents.

Further, the flow holes 51 provided in the second smashing blades 50 are slantly formed at a fixed angle with respect to the shaft 20 so that the second smashing blades rotate in one direction by the water crashed into a surface thereof. As described above, since the bearing 50a is installed in the central portion of the second smashing blade 50, the rotation force of the shaft 20 is not transmitted thereto. In this state, when the flow hole 51 is slantly formed at a fixed angle, the second smashing blade 50 may rotate in a specific direction by a pressure of water.

More particularly, when the flow holes 51 of the second smashing blade 50 are slantly formed in a specific direction such as an upward, downward, leftward or rightward inclination, and the shaft 20 rotates in a clockwise direction, the second smashing blade 50 may be configured so as to rotate in a counterclockwise direction.

Since the first smashing blades 40 are fixed to the shaft 20, when the shaft 20 rotates in the clockwise direction, the first smashing blades also rotate in the clockwise direction at the same speed. Herein, as described above, when the second smashing blades 50 rotate in the counterclockwise direction, and due to the bearing 50a, the second smashing blades 50 rotate at a different speed from the first smashing blades 40, the eddies and currents are accelerated, and much more oxygen is dissolved in the water.

Meanwhile, at least one of the first smashing blade 40 and the second smashing blade 50 has concavo-convexes 42 or 52 repeatedly formed on an outer circumference thereof. The concavo-convexes 42 and 52 may disturb the flow of water to facilitate the currents.

Moreover, although not illustrated in the drawings, when agitating protrusions (not illustrated) are formed on a surface of at least one of the first smashing blade 40 and the second smashing blade 50, the eddies and currents are more accelerated to facilitate the oxygen to be rapidly dissolved in the water.

The housing 60 is a long cylinder which encloses most components of the oxygen dissolution device of the present invention except the electric motor 10, and has an empty space formed therein, in which the shaft 20 with the impeller 30, the first smashing blades 40, and the second smashing blades 50 rotate. The above-described housing 60 includes the air injection port 61, the water injection port 62, and a water discharge port 63 on the rear side thereof.

The air injection port 61 is connected with a high-pressure oxygen tank 61a through a pipe. Oxygen in the high-pressure oxygen tank 61a is supplied into the housing 60 through the air injection port 61.

The water injection port 62 is provided so as to supply external water into the housing 60. In this case, the water introduced through the water injection port 62 and the oxygen introduced through the air injection port 61 are agitated in the housing 60 to be converted into oxygen-dissolved water.

The water discharge port 63 is a portion from which the oxygen-dissolved water formed by mixing the oxygen introduced through the air injection port 61 and the water introduced through the water injection port 62 is discharged. That is, the oxygen introduced through the air injection port 61 and the water introduced through the water injection port 62 alternately pass through the flow holes of the first smashing blades 40 and the second smashing blades 50 to be mixed with each other so as to be converted into the oxygen-dissolved water, and the oxygen-dissolved water is discharged through the water discharge port 63 to an outside.

### Description of Reference Numerals

- 10:: electric motor
- 20:: shaft
- 30:: impeller
- 40:: first smashing blade
- 41:: flow hole
- 42:: concavo-convex
- 50:: second smashing blade
- 50a:: bearing
- 51:: flow hole
- 52:: concavo-convex
- 60:: housing
- 61:: air injection port
- 61a:: high-pressure oxygen tank
- 62:: water injection port
- 63:: water discharge port

## Claims

1. An oxygen dissolution device comprising: an electric motor 10; a shaft 20 which is connected to a motor shaft of the electric motor 10 to rotate therewith; an impeller 30 which is fixed to the shaft 20 to rotate therewith when the shaft 20 rotates; a plurality of first smashing blades 40 which are mounted on the shaft 20 apart from each other at a fixed interval while the shaft 20 passes through central portions thereof, and have a plurality of flow holes 41 formed therein; a plurality of second smashing blades 50 which are mounted between the first smashing blades 40 on the shaft 20 which passes through central portions thereof, and have a plurality of flow holes 51 formed therein; and a housing 60 which encloses the impeller 30, the first smashing blades 40 and the second smashing blades 50, and includes an air injection port 61 into which oxygen is introduced, a water injection port 62 into which water is introduced, and a water discharge port 63 through which oxygen-dissolved water, in which oxygen and water are mixed, is discharged,
wherein the first smashing blades 40 are fixedly mounted on an outer circumference of the shaft 20 through the central portions thereof so as to rotate therewith when the shaft 20 rotates, and
the second smashing blades 50 are mounted on the shaft 20 though bearings 50a which are installed in the central portions thereof so that a rotation force of the shaft is not transmitted thereto.

2. The oxygen dissolution device according to claim 1, wherein the flow holes 41 formed in the first smashing blades 40 and the flow holes 51 formed in the second smashing blades 50 have different areas from each other.

3. The oxygen dissolution device according to claim 1, wherein the flow holes 51 provided in the second smashing blades 50 are slantly formed at a fixed angle with respect to the shaft 20 so that the second smashing blades rotate in one direction by water crashed into a surface thereof.

4. The oxygen dissolution device according to claim 1, wherein at least one of the first smashing blade 40 and the second smashing blade 50 has concavo-convexes 42 or 52 repeatedly formed on an outer circumference thereof.
